# EUROPÄISCHE PATENTANMELDUNG

(11) **EP 2 177 772 A2**
(43) Veröffentlichungstag der Anmeldung: **21.04.2010**
(21) Anmeldenummer: 09012439.7
(22) Anmeldetag: 01.10.2009
(51) Int. Cl.: F16B 5/00

(54) **Befestigungselement zu einer schalldämmenden Befestigung**

(30) Priorität: 17.10.2008 DE 102008052164
(71) Anmelder: fischerwerke GmbH & Co. KG, 72178 Waldachtal (DE)
(72) Erfinder: Schillinger, Peter, 72224 Ebhausen (DE); Vondra, Lukas, 752 01 Kojetin (CZ); Polach, Petr, 752 01 Kojetin (CZ)

(57) **Zusammenfassung**

Die Erfindung betrifft ein Befestigungselement (1) zu einer schalldämmenden Befestigung beispielsweise eines Warmwasserboilers, eines Durchlauferhitzers oder einer Gastherme, mit einem rohrförmigen elastischen Körper (2), der zwischen den Flanschen (10, 7) zweier ineinander ziehbarer Körper (6, 9) stauchbar und dadurch aufweitbar ist. Die Erfindung schlägt vor, den elastischen Körper (2) mit einer in unverformtem Zustand kegelstumpfförmigen Mantelfläche (4) und mit einer Spreizeinrichtung (21) beispielsweise nach Art einer Spannzange auszubilden.

## Beschreibung

Die Erfindung betrifft ein Befestigungselement zu einer schalldämmenden Befestigung mit den Merkmalen des Oberbegriffs des Anspruchs 1. Mit "schalldämmend" ist eine geringe Übertragung von Körperschall, also von Schwingungen, von einem befestigten Element auf einen Befestigungsgrund, an oder in dem das Befestigungselement befestigt ist, gemeint.

Ein solches Befestigungselement ist aus der europäischen Patentanmeldung EP 1 491 773 A1 bekannt. Das bekannte Befestigungselement weist einen rohrförmigen, zylindrischen Körper aus einem elastischen Material auf, der von zwei ineinander greifenden, teleskopierbaren Hohlzylindern durchgriffen wird. Die Zylinder weisen Flanschscheiben an ihren Enden auf, zwischen denen sich der rohrförmige, elastische Körper befindet. Die Hohlzylinder sind entweder ineinander geschraubt oder sie sind mit einer durchgesteckten Schraube verbunden, auf die eine Mutter geschraubt ist. Die beiden Hohlzylinder bilden eine Spanneinrichtung, sie lassen sich durch eine Schraubbewegung axial zueinander bewegen, wodurch sich ihre Flanschscheiben einander nähern und den elastischen Körper axial stauchen, womit ein axiales Verkürzen des elastischen Körpers gemeint ist.

Zur Befestigung wird das bekannte Befestigungselement durch ein Loch in einer Platte gesteckt und der elastische Körper wird mit den beiden die Spanneinrichtung bildenden Hohlzylindern gestaucht. Durch das Stauchen weitet sich der elastische Körper auf und hält dadurch klemmend in der Platte. Außerdem bildet der elastische Körper durch das Stauchen einen nach außen stehenden, umlaufenden Wulst auf einer Rückseite der Platte, der die Platte hintergreift und das Befestigungselement durch Formschluss gegen Herausziehen aus der Platte hält.

Aufgabe der Erfindung ist, ein Spreizverhalten, also die Aufweitung des elastischen Körpers beim Stauchen mit der Spanneinrichtung, zu verbessern.

Diese Aufgabe wird erfindungsgemäß durch die Merkmale des Anspruchs 1 gelöst. Der rohrförmige, elastische Körper des erfindungsgemäßen Befestigungselements erweitert sich in unverformtem Zustand in einer Richtung, seine Mantelfläche ist beispielsweise kegelstumpfförmig. Auch eine ballige oder hohlrunde Mantelfläche oder ein Mehrkant, beispielsweise ein Pyramidenstumpf, sind denkbar. Die Aufzählung ist nicht abschließend.

Das erfindungsgemäße Befestigungselement eignet sich sowohl zu einer Befestigung in einem Durchgangsloch in einer Platte als auch in einem Durchgangs- oder einem Sackloch in einem Vollbaustoff. Zur Befestigung in einem Loch in einer Platte wird der elastische Körper mit der Spanneinrichtung axial gestaucht und weitet sich dadurch auf, so dass er klemmend in der Platte hält. Der elastische Körper steht auf einer Rückseite der Platte vor, wo er sich durch das Stauchen beispielsweise unter Ausbildung eines umlaufenden Wulstes aufweitet und die Platte formschlüssig hintergreift. Die größte Aufweitung des elastischen Körpers erfolgt auf der Rückseite der Platte, wo der elastische Körper seinen größten Umfang aufweist. Innerhalb der Platte ist die Aufweitung und damit eine Kriechneigung, also eine Neigung zu einer plastischen Verformung des elastischen Körpers, geringer. Das ist ein Vorteil für einen dauerhaft guten Halt des erfindungsgemäßen Befestigungselements in einer Platte.

In einem Vollbaustoff ist die Andruckkraft des mit der Spanneinrichtung axial gestauchten elastischen Körpers dort am größten, wo er in unverformtem Zustand den größten Umfang hat. Das ist in einer Tiefe des Lochs, die einer Länge des elastischen Körpers entspricht. Die größte Andruckkraft wirkt also unterhalb einer Oberfläche des Vollbaustoffs. Das ist aus mehreren Gründen vorteilhaft, u.a. weil ein in einen Vollbaustoff gebohrtes Loch vielfach einen Mündungskrater aufweist. Ein weiterer Grund ist, dass das Befestigungselement auch dann, wenn es ein Stück weit aus dem Loch im Vollbaustoff herausgezogen wird, immer noch einen nahezu unverändert guten Halt im Loch aufweist. Darüber hinaus ist die Gefahr des Ausbruchs des Vollbaustoffs umso geringer, je tiefer im Loch die Haltekräfte eingeleitet werden.

Das erfindungsgemäße Befestigungselement eignet sich zu einer sog. Durchsteckmontage, es muss nur eine Seite des Befestigungsgrundes zugänglich sein, eine Zugänglichkeit der Rückseite ist nicht notwendig.

Anwendungsmöglichkeiten des erfindungsgemäßen Befestigungselements sind die Befestigung von Warmwasserboilern, Durchlauferhitzern, Gasthermen und allgemein von Körperschall erzeugenden Gegenständen wie Lautsprecherboxen. Auch sonstige Gegenstände, beispielsweise ein Flachbild-Fernseher, lassen sich mit dem erfindungsgemäßen Befestigungselement befestigen.

Eine Ausgestaltung der Erfindung sieht eine radial überstehende Anlage auf einer umfangskleineren Seite des elastischen Körpers vor. Die Anlage hat beispielsweise die Form eines Flanschs. Das Befestigungselement wird in ein Loch in einem Befestigungsgrund gesteckt, bis die Anlage an einer Oberfläche des Befestigungsgrunds anliegt. Anschließend wird der elastische Körper mit der Spanneinrichtung des Befestigungselements axial gestaucht und das Befestigungselement dadurch in vorstehend erläuterter Weise im Befestigungsgrund reibschlüssig und in einer Platte zusätzlich durch den Hintergriff formschlüssig befestigt. Die Anlage stellt eine vorgesehene Montagelage des Befestigungselements im Befestigungsgrund und ein Einbringen mit dem umfangsgrößeren Ende des elastischen Körpers voraus sicher.

Um die Aufweitung des elastischen Körpers zu verstärken sieht eine Ausgestaltung der Erfindung eine Spreizeinrichtung vor, mit der der elastische Körper aufweitbar ist. Die Spreizeinrichtung kann beispielsweise vergleichbar einer Spannzange ausgebildet sein, allerdings mit der Maßgabe, dass Segmente der Spreizeinrichtung nach außen gespreizt werden und dadurch den rohrförmigen, elastischen Körper aufweiten, anstatt wie bei einer Spannzange nach innen gedrückt zu werden. Vorzugsweise werden die Spanneinrichtung und die Spreizeinrichtung gemeinsam, beispielsweise durch Anziehen einer Schraube betätigt. Die Spanneinrichtung und die Spreizeinrichtung können gemeinsame Elemente aufweisen. Die Verstärkung der Aufweitung des elastischen Körpers durch die Spreizeinrichtung erhöht den Druck des elastischen Körpers nach außen gegen eine Lochwandung und verbessert dadurch den Halt des Befestigungselements. Es sind Ausgestaltungen der Erfindung mit der Spreizeinrichtung möglich, deren rohrförmiger elastischer Körper sich in unverformtem Zustand nicht in einer Richtung erweitert, also beispielsweise eine zylindrische Mantelfläche aufweist.

Wie weiter oben erläutert ist es von Vorteil, wenn die stärkste Aufweitung des elastischen Körpers nicht an einer Lochmündung erfolgt, sondern mit Abstand von einer Oberfläche des Befestigungsgrunds im Loch. Deswegen sieht eine Weiterbildung der Erfindung die Anordnung der Spreizeinrichtung mit Abstand von dem im Umfang kleineren Ende des elastischen Körpers vor. Die Spreizeinrichtung kann beispielsweise in einem mittleren Bereich in Längsrichtung des elastischen Körpers vorgesehen sein.

Die Erfindung wird nachfolgend anhand eines in der Zeichnung dargestellten Ausführungsbeispiels näher erläutert. Es zeigen:
- Figur 1: einen Achsschnitt eines erfindungsgemäßen Befestigungselements; und
- Figur 2: das Befestigungselement aus Figur 1 befestigt in einer Platte.

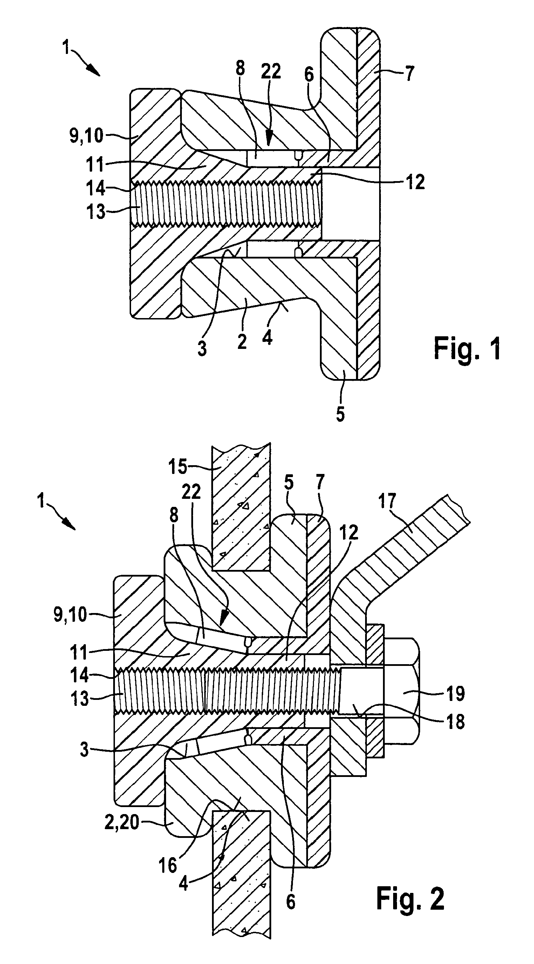

Das in Figur 1 dargestellte, erfindungsgemäße Befestigungselement 1 weist einen rohrförmigen, elastischen Körper 2 aus beispielsweise Gummi oder einem gummielastischen Kunststoff auf. Der Körper 2 weist ein koaxiales, zylindrisches Durchgangsloch 3 und eine kegelstumpfförmige Mantelfläche 4 auf. Am durchmesserkleineren Ende weist der Körper 2 einen Flansch 5 auf.

Von der Seite des Flanschs 5 aus ist ein weiterer, rohrförmiger Körper 6 in das Durchgangsloch 3 des elastischen Körpers 2 gesteckt. Der weitere Körper 6 weist ebenfalls einen Flansch 7 auf, der am Flansch 5 des elastischen Körpers 2 anliegt und den gleichen Durchmesser aufweist. Die Durchmesser der Flansche 5, 7 sind größer als ein Durchmesser des elastischen Körpers 2 an dem den Flanschen 5, 7 fernen Ende, wo der elastische Körper 2 aufgrund seiner Kegelstumpfform einen größeren Durchmesser als an seinem den Flansch 5 aufweisenden Ende aufweist. Durch Schlitze in einander kreuzenden Längsmittelebenen ist der rohrförmige, weitere Körper 6 in Spreizsegmente 8 unterteilt, die sich in Längsrichtung gesehen in einem mittleren Bereich des elastischen Körpers 2 befinden. Die Flansche 5, 7 bilden eine radial überstehende Anlage des Befestigungselements 1.

Von einer gegenüberliegenden Seite ist ein dritter Körper 9 in das Durchgangsloch 3 des elastischen Körpers 2 und in den rohrförmigen weiteren Körper 6 gesteckt. Der dritte Körper 9 weist einen Flansch 10 an dem den Flanschen 5, 7 des elastischen Körpers 2 und des weiteren Körpers 6 fernen Ende des elastischen Körpers 2 auf. Der Flansch 10 des dritten Körpers 9 weist den gleichen Durchmesser wie das ihm zugewandte, durchmessergrößere Ende des kegelstumpfförmigen elastischen Körpers 2 auf. Vom Flansch 10 des dritten Körpers 9 steht koaxial ein Spreizkegel 11 ab, der in einen Zylinder 12 übergeht. Ein Außendurchmesser des Zylinders 12 entspricht einem Innendurchmesser des rohrförmigen weiteren Körpers 6. Der Zylinder 12 des dritten Körpers 9 befindet sich zwischen den Spreizsegmenten 8 des weiteren Körpers 6. Auch der dritte Körper 9 ist rohrförmig, er weist ein durchgehendes Axialloch 13 mit einem Innengewinde 14 auf.

Der weitere Körper 6 und der dritte Körper 9 bestehen aus einem steifen Werkstoff geringer Elastizität, im Ausführungsbeispiel sind sie aus einem faserverstärkten Kunststoff hergestellt. Möglich ist auch eine Herstellung beispielsweise aus Metall. Das Innengewinde 14 befindet sich ebenfalls im Kunststoff, es ist allerdings möglich, eine Innengewindebuchse mit dem Kunststoff zu umspritzen oder eine Mutter einzulegen (nicht dargestellt).

Eine Befestigung des Befestigungselements 1 ist in einem Vollbaustoff in einem Loch oder Sackloch möglich, das so tief wie das Befestigungselement 1 abzüglich der Dicke der beiden Flansche 5, 7 lang ist. In Figur 2 ist eine ebenfalls mögliche Befestigung in einer Platte 15, beispielsweise einer Gipskartonplatte, die dünner als der kegelstumpfförmige Teil des elastischen Körpers 2 lang ist, dargestellt. Die Platte 15 ist mit einem zylindrischen Durchgangsloch 16 versehen, dessen Durchmesser geringfügig größer als ein Durchmesser des Flanschs 10 des dritten Körpers 9 und der größere Durchmesser der kegelstumpfförmigen Mantelfläche 4 des elastischen Körpers 2 ist. Das Befestigungselement 1 wird durch das Durchgangsloch 16 in der Platte 15 gesteckt, bis die Flansche 5, 7 an der Platte 15 anliegen. Anschließend wird ein zu befestigender Gegenstand aufgesetzt, in Figur 2 ist beispielhaft ein Konsolenfuß 17 dargestellt. Der Konsolenfuß 17 weist ein Durchgangsloch 18 auf, mit dem er fluchtend auf das Durchgangsloch 3 des Befestigungselements 1 aufgesetzt wird. Danach wird eine Schraube 19 durchgesteckt und in das Innengewinde 14 des dritten Körpers 9 eingeschraubt. Die Schraube 19 zieht den dritten Körper 9 tiefer in den elastischen Körper 2 und den weiteren Körper 6, wobei ein Abstand des Flanschs 10 des dritten Körpers 9 von den Flanschen 5, 7 des elastischen Körpers 2 und des weiteren Körpers 6 kleiner wird; der elastische Körper 2 wird axial gestaucht und weitet sich dadurch auf. Der dritte Körper 9 und der weitere Körper 6, zwischen deren Flanschen 10, 7 der elastische Körper 2 stauchbar ist, bilden eine Spanneinrichtung zum Stauchen und Aufweiten des elastischen Körpers 2. Durch die Aufweitung drückt der elastische Körper 2 gegen eine Lochwand des Durchgangslochs 16 in der Platte 15, so dass das Befestigungselement 1 reibschlüssig in der Platte 15 befestigt ist.

Auf einer Rückseite der Platte 15 verformt sich der elastische Körper 2 durch die Stauchung zu einem umlaufenden, nach außen stehenden Wulst 20, der die Platte 15 hintergreift. Der Wulst 20 hält das Befestigungselement 1 formschlüssig in der Platte 15. Die Verformung des elastischen Körpers 2 durch die Stauchung ist im Bereich des Wulstes 20 am größten, somit ist dort auch eine Kriechneigung, also eine Neigung zu einer plastischen Verformung, am größten. Innerhalb der Platte 15, wo die in unverformtem Zustand kegelstumpfförmige Mantelfläche 4 des elastischen Körpers 2 einen kleineren Durchmesser aufweist, ist die Verformung des gestauchten elastischen Körpers 2 und damit seine Kriechneigung geringer. Die Gefahr, dass sich die Kraft, mit der der gestauchte elastische Körper 2 nach außen gegen die Lochwand des Durchgangslochs 16 in der Platte 15 drückt, durch plastische Verformung, also durch eine Relaxation, mit der Zeit abnimmt, ist durch die Kegelform der Mantelfläche 4 des elastischen Körpers 2 in unverformtem Zustand geringer.

Die Aufweitung des elastischen Körpers 2 wird beim Anziehen der Schraube 19 durch die Spreizsegmente 8 vergrößert, die auf den Spreizkegel 11 des dritten Körpers 9 aufgleiten und nach außen gespreizt werden. Dabei weiten die Spreizsegmente 8 den elastischen Körper 2 zusätzlich auf, wodurch die Befestigung in der Platte 15 verbessert wird. Die Spreizsegmente 8 und der Kegel 11 bilden eine Spreizeinrichtung 21 des Befestigungselements 1. Die Spreizeinrichtung 21 wird gemeinsam mit der Spanneinrichtung, welche der weitere Körper 6 und der dritte Körper 9 bilden, die den elastischen Körper 2 stauchen, durch Anziehen der Schraube 19 betätigt.

### Befestigungselement zu einer schalldämmenden Befestigung

- 1: Befestigungselement
- 2: elastischer Körper
- 3: Durchgangsloch
- 4: Mantelfläche
- 5: Flansch
- 6: weiterer Körper
- 7: Flansch
- 8: Spreizsegment
- 9: dritter Körper
- 10: Flansch
- 11: Spreizkegel
- 12: Zylinder
- 13: Axialloch
- 14: Innengewinde
- 15: Platte
- 16: Durchgangsloch
- 17: Konsolenfuß
- 18: Durchgangsloch
- 19: Schraube
- 20: Wulst
- 21: Spreizeinrichtung

## Patentansprüche

1. Befestigungselement zu einer schalldämmenden Befestigung, mit einem rohrförmigen, elastischen Körper (2) und mit einer Spanneinrichtung, die den elastischen Körper (2) durchgreift und mit der der elastische Körper (2) axial stauchbar ist, **dadurch gekennzeichnet, dass** sich der elastische Körper (2) in unverformtem Zustand in einer Richtung erweitert.

2. Befestigungselement nach Anspruch 1, **dadurch gekennzeichnet, dass** das Befestigungselement (1) eine radial überstehende Anlage (5, 7) an dem Ende des elastischen Körpers (2) aufweist, in dessen Richtung sich der elastische Körper (2) verjüngt.

3. Befestigungselement nach Anspruch 1, **dadurch gekennzeichnet, dass** das Befestigungselement (1) eine Spreizeinrichtung (21) in dem elastischen Körper (2) aufweist, mit der der elastische Körper (2) aufweitbar ist.

4. Befestigungselement nach Anspruch 3, **dadurch gekennzeichnet, dass** die Spreizeinrichtung (21) Abstand von dem Ende des elastischen Körpers (2) aufweist, in dessen Richtung sich der elastische Körper (2) verjüngt.
